# FASCICULE DE BREVET EUROPEEN

(11) **EP 2 085 288 B1**
(45) Date de publication et mention de la délivrance du brevet: **29.12.2010**
(21) Numéro de dépôt: 09290069.5
(22) Date de dépôt: 30.01.2009
(51) Int. Cl.: B62B 3/00, B62B 3/02, F17C 13/08, B62B 3/10

(54) **Chariot hospitalier multi-bouteilles polyvalent**
Mehrzwecktransportvorrichtung zur Beförderung mehrerer Flaschen im Krankenhaus
Multifunctional handcart with several bottles for use in hospitals

(30) Priorité: 31.01.2008 FR 0850590
(43) Date de publication de la demande: 05.08.2009
(73) Titulaire: Air Liquide Santé France, 92088 Paris la Defense (FR)
(72) Inventeur: Esteves, Aldiro, 75019 Paris (FR); Guiberteau, Bertrand, 78170 La Celle Saint Cloud (FR)
(74) Mandataire: Pittis, Olivier

(56) Documents cités:
- FR-A- 1 282 944
- JP-A- 7 117 675
- JP-A- 2003 011 826
- US-A- 4 967 934
- US-A1- 2006 043 094

## Description

La présente invention porte sur un chariot de transport de bouteilles de gaz polyvalent permettant de transporter facilement plusieurs bouteilles de gaz, par exemple de 3 à 12 bouteilles de gaz, en particulier au sein d'un établissement hospitalier.

Au sein des bâtiments hospitaliers, les gaz médicaux, tel l'oxygène, les mélanges N₂O/O₂, le NO, les mélanges He/O₂... peuvent être, selon le cas, soit distribués par des canalisations ou des réseaux de canalisations de gaz, soit être conditionnés en bouteilles de gaz qui sont amenées jusque sur le lieu de leur utilisation, notamment dans les salles de soins ou analogues.

Les bouteilles de gaz utilisés à cette fin peuvent être classées en trois catégories, en fonction de leur capacité (exprimée en litres d'eau), à savoir: les « grandes » bouteilles (environ 50 litres), les « petites » bouteilles (environ 5 1 ou moins) et les bouteilles dites « moyennes » (15 à 201 environ).

L'utilisation des gaz médicaux ou des dispositifs médicaux associés tend à être de plus en plus « mobile ». Ainsi, les gaz médicaux, qui sont désormais considérés comme des médicaments, sont couramment mis en oeuvre par les secours d'urgence, tel le SAMU ou les pompiers ; lors des transferts de malades entre différents services et/ou entre différents établissements, notamment du fait des spécialisations et des regroupements d'établissements ; ou encore pour accroitre la mobilité des patients soignés à domicile...

Par ailleurs, l'arrivée de nouveaux gaz à usage thérapeutique engendre un retour de bouteilles de capacité « moyenne » au sein même des services.

Ce phénomène a pour conséquence une stabilisation des besoins en gaz médicaux conditionnés en « grandes » bouteilles et, à contrario, une croissance régulière des besoins en gaz médicaux conditionnés en « petites » bouteilles ou en bouteilles « moyennes ».

Pour transporter ces bouteilles, l'utilisateur peut soit les porter, soit utiliser un chariot de transport notamment lorsque la bouteille est lourde ou que plusieurs bouteilles doivent être déplacées.

Les chariots de transport actuellement disponibles en milieu hospitalier permettent soit le transport d'une seule « grande » bouteille ou d'une bouteille « moyenne », soit le transport de quelques « petites » bouteilles. Toutefois, les chariots actuellement utilisés présentent des inconvénients, à savoir qu'ils ne sont généralement pas adaptés au transport de plus de 2 bouteilles grandes ou moyennes, ou que lorsqu'ils sont prévus pour transporter plusieurs petites bouteilles, ils ne sont pas ou que peu ergonomiques et ne permettent généralement pas de transporter plus de 6 à 8 bouteilles, même de petite taille (5 l).

En outre, ces chariots présentent généralement un fond plat muni de roues, sur lequel sont positionnées la ou les bouteilles à transporter, en y étant retenues par un moyen d'arrimage, telle une chaîne ou analogue. Or, on comprend aisément que lorsque plusieurs bouteilles sont positionnées sur le chariot, lors d'un déplacement du chariot d'un endroit à un autre, toute manoeuvre d'arrêt d'urgence du chariot par l'opérateur ou d'évitement d'un obstacle, peut engendrer un basculement des bouteilles vers l'avant conduisant à un risque de rupture du moyen d'arrimage du fait du poids des bouteilles et leur chute subséquente. Ce risque de chute existe également avec les bouteilles « moyennes » et surtout avec les « petites » bouteilles qui peuvent elles passer sous le moyen d'arrimage.

Ainsi, le document JP-A-07117675 décrit un chariot de transport de bouteilles de gaz selon le préambule de la revendication 1 formé d'un cadre monté sur quatre roues de même diamètre, dont le fond est parallèle à la surface du sol. Un chariot similaire est divulgué pour le document US-A-2006/0043094.

Par ailleurs, le document JP-A-2003011826 enseigne un dispositif de transport de charges comprenant un fond incliné par rapport au sol. De plus, ce dispositif comporte des roues de diamètres différents dont celles situées à l'arrière sont couplées à un système particulier de levage des charges comprenant des guides sur lesquels coulissent les roues.

Un but de l'invention est dès lors de proposer un chariot polyvalent amélioré pour transporter non seulement plusieurs bouteilles, notamment plus de 10 « petites » bouteilles (capacité : 5 litres maximum), mais aussi plusieurs bouteilles « moyennes » (capacité : 15 à 20 litres), lequel ne présente pas les inconvénients susmentionnés.

Un autre but de l'invention est dès lors de proposer un chariot conduisant à une sécurité d'utilisation accrue et, si possible, à une meilleure ergonomie facilitant ses manoeuvres par l'utilisateur.

La solution de l'invention est un chariot de transport de bouteilles de gaz

selon la revendication 1.

Selon le cas, le chariot de l'invention peut comprendre l'une ou plusieurs des caractéristiques suivantes : - une ou plusieurs étagères, escamotables ou repliables, venant se positionner au dessus du fond dans le volume interne formé par les parois latérales et la paroi arrière,
- le plan comprenant le fond forme un angle (α) supérieur ou égal à 8° par rapport au plan formé par le sol, de préférence supérieur ou égal à 10°.
- le plan comprenant le fond forme un angle (α) inférieur ou égal à 35° par rapport au plan formé par le sol, de préférence inférieur ou égal à 30°.
- le fond, la paroi arrière et les parois latérales sont ajourées.
- il comporte, en outre, des moyens de guidage permettant de manoeuvrer le chariot lors de ses déplacements sur le sol, en particulier une ou plusieurs poignées ou arceau de manipulation.
- la paroi arrière et les parois latérales sont métalliques et sont soudés sur la structure-châssis.
- les roues sont fixées à la structure-châssis.
- il comporte, par ailleurs, une ou plusieurs étagères venant se positionner au dessus du fond dans le volume interne formé par les parois latérales et la paroi arrière, de préférence le

plan comprenant chaque étagère forme un angle (α) compris entre 5° et 40° par rapport au plan formé par le sol, en particulier le plan de chaque étagère est parallèle au plan du fond.
- il comporte 3 étagères, de préférence les étagères sont escamotables ou repliables.
- il comporte un système d'arrimage permettant de maintenir les bouteilles en position
   « debout ».
- tout ou partie du fond, de la paroi arrière et des parois latérales est formée d'un treillis métallique.
- il est dimensionné pour recevoir, dans son volume interne, au moins 12 bouteilles de capacité inférieure ou égale à 5 litres, en position « couchée », ou 4 bouteilles de capacité égale à 15 litres, en position « debout », ou 3 bouteilles de capacité égale à 20 litres, en position « debout ».

L'invention va maintenant être mieux comprise grâce à la description illustrative suivante, faite en références aux figures annexées.

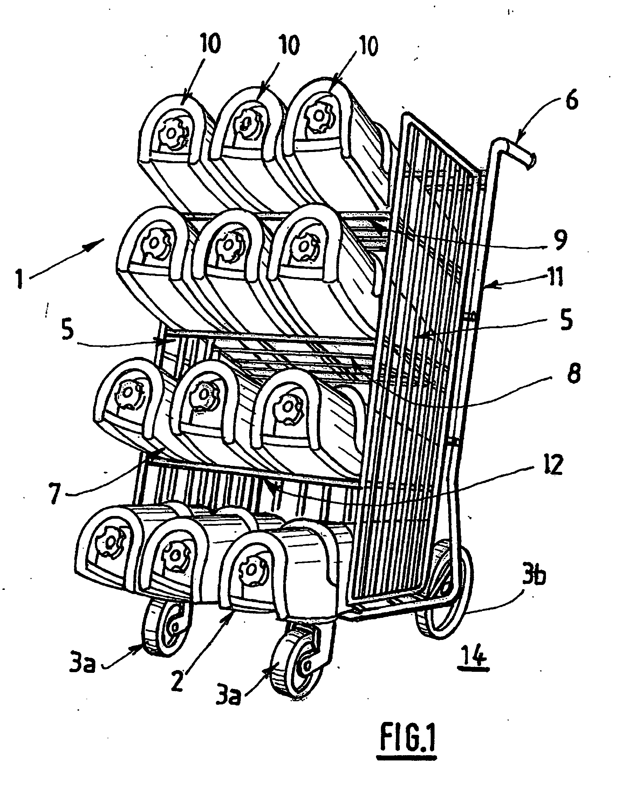

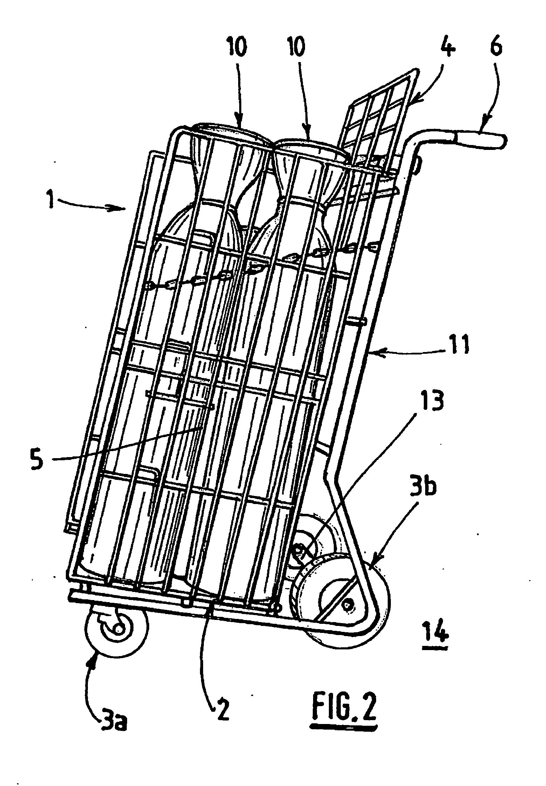

Les Figures 1 et 2 représentent un mode de réalisation d'un chariot 1 de transport de bouteilles de gaz selon l'invention portant 12 petites bouteilles 10 de gaz de 5 litres de capacité (figure 1) ou, de façon alternative, 3 bouteilles moyennes de 20 litres (figure 2).

Le chariot 1 comprend un fond 2 permettant de recevoir plusieurs bouteilles de gaz 10, en position « debout » (fig. 2) ou « couchée » (fig. 1). Le fond 2 est surmonté d'une paroi arrière 4 et de deux parois latérales 5, se faisant face, et disposées de manière à former, avec la paroi arrière 4, un volume interne 12 où sont disposées les bouteilles de gaz.

Afin d'obtenir une structure rigide mais aussi légère que possible, le fond 2, la paroi arrière 4 et/ou les parois latérales 5 sont de préférence ajourés et réalisés en un matériau résistant, par exemple en une sorte de treillis métallique, par exemple en acier, comme visible sur les figures 1 et 2. Toutefois, d'autres matériaux peuvent également contenir, par exemple, on peut les réaliser en polymère, en matériau composite ou autres.

Une structure-châssis 11 supporte le fond 2, la paroi arrière 4 et/ou les parois latérales 5. Avantageusement, la structure-châssis 11 est métallique, par exemple en acier, et le fond 2 et les parois 4, 5 sont soudées à ladite structure-châssis 11. Sur les figures, la structure-châssis 11 a été réalisée à partir d'éléments tubulaires conformés et soudés ensemble selon une forme tridimensionnelle désirée.

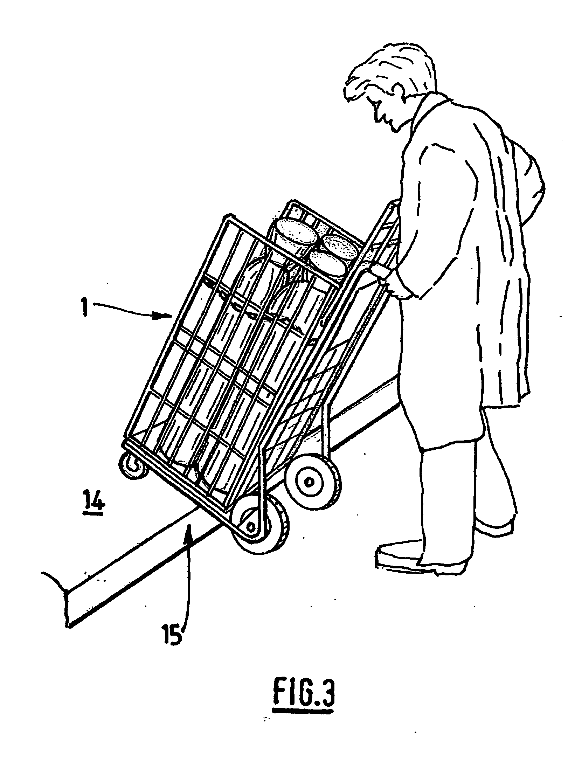

Plusieurs roues 3a, 3b permettent le déplacement du chariot 1 par roulage sur le sol 14. Avantageusement, il comporte deux roues avant 3a et deux roues arrière 3b, les roues arrière 3b ayant un diamètre de roue supérieur au diamètre de roue des roues avant 3a, ce qui facile notamment le passage d'obstacles, telles les bordures 15, comme illustré en figure 3. A titre d'exemple, les roues arrière peuvent avoir un diamètre de l'ordre de 20 cm et les roues avant de l'ordre de 12 cm.

Les roues 3a, 3b peuvent être fixées directement à la structure-châssis 11 ou alors portées par un essieu lui-même relié à la structure-châssis 11, en particulier les roues arrières 3b sont préférentiellement portées par un essieu 13.

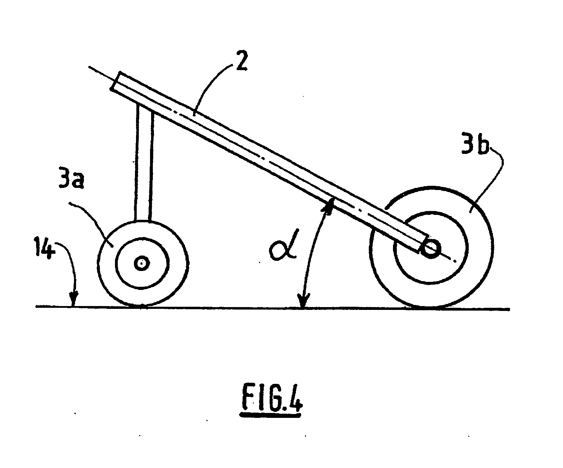

Selon l'invention, comme illustré en figure 4, le plan comprenant le fond 2 forme un angle α compris entre 5° et 40° par rapport au plan formé par le sol 14, c'est-à-dire le plan sur lequel reposent les roues 3a, 3b. En effet, grâce à une telle inclinaison, on augmente l'angle de stockage des bouteilles 10 (par rapport à un positionnement à l'horizontal selon l'art antérieur) et on évite alors qu'elles ne tombent ou ne basculent, en cas en d'arrêt soudain du chariot 1 ou lors d'une manoeuvre brusque de l'opérateur. A titre d'exemple, l'angle α peut être de l'ordre de 10° à 15°.

Par ailleurs, afin d'augmenter la capacité de transport, notamment de petites bouteilles, selon l'invention, le chariot 1 est muni de 3 étagères 7, 8, 9 escamotables permettant de recevoir 12 petites bouteilles (de maxi. 5 1) en position « couchée », comme montré en figure 1, ou lorsque les étagères 7, 8, 9 sont relevées ou repliées, 3 ou 4 bouteilles moyennes, de 20 1 ou de 15 1, respectivement, en position « debout », comme visible en figure 2 ; une chaine ajustable ou tout autre système d'arrimage adapté est utilisée afin de maintenir les bouteilles transportées en position « debout ».

Les étagères 7, 8, 9 sont escamotables, c'est-à-dire qu'elles peuvent être soit totalement démontées et retirées du chariot 1, soit simplement être repliées (par exemple par pivotement) pour libérer l'espace interne 12 tout en restant solidarisées au chariot 1 ; dans ce cas, lorsqu'elles sont repliées, elles viennent se positionner le long de la paroi arrière 4 ou d'une des parois latérales 5.

Afin d'éviter la chute des bouteilles qui y sont positionnées, les étagères 7, 8, 9 forment également un angle compris entre 5° et 40° par rapport au plan formé par le sol, en particulier le plan de chaque étagère 7, 8, 9 est parallèle au plan du fond 2. Il n'est pas obligatoire mais est préférentiel que le plan de chaque étagère 7, 8, 9 soit parallèle à celui du fond 2, donc que chaque étagère 7, 8, 9 forme un angle α égale à celui du fond 2 avec le plan sur lequel repose les roues 3a, 3b, c'est-à-dire avec généralement l'horizontal formé par la surface du sol.

En outre, un tapis peut également fixé au fond 2 du chariot 1 afin de le protéger des impacts engendrés par les bouteilles 10 de capacité « moyenne », notamment lors que leur chargement sur le chariot 1.

Les dimensions d'un chariot selon l'invention peuvent être, par exemple, une hauteur comprise entre 90 et 120 cm, une largeur comprise entre 45 et 65 cm, et une profondeur comprise entre 75 et 90 cm.

Des poignées 6 ou un arceau de manipulation permet à l'opérateur de manoeuvrer le chariot 1 sur le sol et de le déplacer par roulage. Les poignées 6 ou analogues sont également portées par la structure-châssis 11.

Le chariot 1 de l'invention présente de nombreux avantages, à savoir une grande polyvalence puisqu'il est adapté au transport de toutes les bouteilles de gaz jusqu'à 20 litres de contenance ; une sécurité (chute de bouteilles) et une ergonomie accrues (position debout de l'utilisateur lors du transport) ; une efficacité augmentée (moins de déplacements, centralisation sur une personne pour la répartition des bouteilles dans les services) ; et une maniabilité plus importante (dimensions externes compatibles avec les portes et les ascenseurs, franchissement des bordures..).

Les utilisations potentielles du chariot 1 de l'invention sont le transfert des bouteilles, soit au sein les centres de conditionnement, soit entre le camion de livraison et leur lieu de stockage, soit dans les établissements de santé ou autres au sein desquels une répartition de bouteilles entre différents services est requise.

## Revendications

1. Chariot (1) de transport de bouteilles de gaz (10) comprenant un fond (2) conçu pour et apte à recevoir une ou plusieurs bouteilles de gaz (10), plusieurs roues (3a, 3b) permettant le déplacement du chariot (1) par roulage sur le sol, et une structure-châssis (11) sur laquelle sont fixées une paroi arrière (4) et des parois latérales (5) disposées de manière à former un volume interne (12) apte à et conçu pour recevoir des bouteilles de gaz (10), **caractérisé en ce que** le plan comprenant le fond (2) forme un angle (α) compris entre 5° et 40° par rapport au plan formé par le sol, mesuré lorsque les roues (3a, 3b) sont sur le sol, et **en ce qu'**il comporte, en outre, une ou plusieurs roues avant (3a) et deux roues arrière (3b), les roues arrière (3b) ayant un diamètre de roue supérieur au diamètre de roue de la ou des roues avant (3a).

2. Chariot selon la revendication 1, **caractérisé en ce que** le plan comprenant le fond (2) forme un angle (α) supérieur ou égal à 8° par rapport au plan formé par le sol, de préférence supérieur ou égal à 10°.

3. Chariot selon l'une des revendications 1 ou 2, **caractérisé en ce que** le plan comprenant le fond (2) forme un angle (α) inférieur ou égal à 35° par rapport au plan formé par le sol, de préférence inférieur ou égal à 30°.

4. Chariot selon l'une des revendications 1 à 3, **caractérisé en ce que** le fond (2), la paroi arrière (4) et les parois latérales (5) sont ajourées.

5. Chariot selon l'une des revendications 1 à 4, **caractérisé en ce qu'**il comporte, en outre, des moyens de guidage (6) permettant de manoeuvrer le chariot (1) lors de ses déplacements sur le sol, en particulier une ou plusieurs poignées ou arceau de manipulation.

6. Chariot selon l'une des revendications 1 à 5, **caractérisé en ce que** le fond (2), la paroi arrière (4) et les parois latérales sont métalliques et sont soudés sur la structure-châssis (11).

7. Chariot selon l'une des revendications 1 à 6, **caractérisé en ce que** les roues (3a, 3b) sont fixées à la structure-châssis (11) ou alors portées par un essieu lui-même fixé à la structure-châssis (11).

8. Chariot selon l'une des revendications 1 à 7, **caractérisé en ce qu'**il comporte, par ailleurs, une ou plusieurs étagères (7, 8, 9) venant se positionner au dessus du fond (2) dans le volume interne (12) formé par les parois latérales (5) et la paroi arrière (4), de préférence le plan comprenant chaque étagère (7, 8, 9) forme un angle (α) compris entre 5° et 40° par rapport au plan formé par le sol, en particulier le plan de chaque étagère (7, 8, 9) est parallèle au plan du fond (2).

9. Chariot selon la revendication 8, **caractérisé en ce qu'**il comporte 3 étagères (7, 8, 9), de préférence les étagères sont escamotables ou repliables.

10. Chariot selon l'une des revendications 1 à 9, **caractérisé en ce qu'**il comporte un système d'arrimage permettant de maintenir les bouteilles en position « debout ».

11. Chariot selon l'une des revendications 1 à 10, **caractérisé en ce que** tout ou partie du fond (2), de la paroi arrière (4) et des parois latérales sont formées d'un treillis métallique.

12. Chariot selon l'une des revendications 1 à 11, **caractérisé en ce qu'**il est dimensionné pour recevoir, dans son volume interne (12), au moins 12 bouteilles de capacité inférieure ou égale à 5 litres, en position « couchée », 4 bouteilles de capacité égale à 15 litres, en position « debout », ou 3 bouteilles de capacité égale à 20 litres, en position « debout ».

13. Utilisation d'un chariot selon l'une des revendications précédentes pour transporter plusieurs bouteilles de gaz au sein d'un bâtiment hospitalier.

## Claims

1. Handcart (1) for transporting gas bottles (10), comprising a bottom (2) designed and able to hold one or more gas bottles (10), a plurality of wheels (3a, 3b) enabling the handcart (1) to move by rolling on the ground, and a framework structure (11) on which are fixed a rear wall (4) and side walls (5) which are arranged to form an internal volume (12) able and designed to hold gas bottles (10), **characterized in that** the plane comprising the bottom (2) forms an angle (α) of between 5° and 40° with respect to the plane formed by the ground, measured when the wheels (3a, 3b) are on the ground, and **in that** it further comprises one or more front wheels (3a) and two rear wheels (3b), the rear wheels (3b) having a wheel diameter greater than the wheel diameter of the front wheel or wheels (3a).

2. Handcart according to Claim 1, **characterized in that** the plane comprising the bottom (2) forms an angle (α) of greater than or equal to 8° with respect to the plane formed by the ground, preferably greater than or equal to 10°.

3. Handcart according to either of Claims 1 and 2, **characterized in that** the plane comprising the bottom (2) forms an angle (α) of less than or equal to 35° with respect to the plane formed by the ground, preferably less than or equal to 30°.

4. Handcart according to one of Claims 1 to 3, **characterized in that** the bottom (2), the rear wall (4) and the side walls (5) contain holes.

5. Handcart according to one of Claims 1 to 4, **characterized in that** it also has guide means (6) for manoeuvring the handcart (1) when it is being moved on the ground, in particular one or more handles or handling loops.

6. Handcart according to one of Claims 1 to 5, **characterized in that** the bottom (2), the rear wall (4) and the side walls are metallic and are welded to the framework structure (11).

7. Handcart according to one of Claims 1 to 6, **characterized in that** the wheels (3a, 3b) are fixed to the framework structure (11) or else carried on an axle which is itself fixed to the framework structure (11).

8. Handcart according to one of Claims 1 to 7, **characterized in that** it furthermore has one or more racks (7, 8, 9) positioned above the bottom (2) in the internal volume (12) formed by the side walls (5) and the rear wall (4), preferably the plane comprising each rack (7, 8, 9) forms and angle (α) of between 5° and 40° with respect to the plane formed by the ground, and in particular the plane of each rack (7, 8, 9) is parallel to the plane of the bottom (2).

9. Handcart according to Claim 8, **characterized in that** it has three racks (7, 8, 9), and preferably the racks can be retracted or folded back.

10. Handcart according to one of Claims 1 to 9, **characterized in that** it has a securing system for keeping the bottles in a "standing" position.

11. Handcart according to one of Claims 1 to 10, **characterized in that** all or part of the bottom (2), of the rear wall (4) and of the side walls consist(s) of a metal lattice.

12. Handcart according to one of Claims 1 to 11, **characterized in that** it is designed to hold, in its internal volume (12), at least 12 bottles having a capacity of less than or equal to 5 litres in the "lying" position, four bottles having a capacity equal to 15 litres in the "standing" position, or three bottles having a capacity equal to 20 litres in the "standing" position.

13. Use of a handcart according to one of the preceding claims for transporting a plurality of gas bottles within a hospital building.

## Patentansprüche

1. Wagen (1) zum Transport von Gasflaschen (10) mit einem Boden (2), der zur Aufnahme einer oder mehrerer Gasflaschen (10) geeignet ist, mehreren Rädern (3a, 3b), die das Bewegen des Wagens (1) durch Rollen über den Fußboden gestatten, und einer Rahmenstruktur (11), an der eine Rückwand (4) und Seitenwände (5) befestigt sind, die so angeordnet sind, dass sie ein Innenvolumen (12) bilden, das zur Aufnahme der Gasflaschen (10) geeignet und konzipiert ist, **dadurch gekennzeichnet, dass** die den Boden (2) enthaltende Ebene einen Winkel (α) zwischen 5° und 40° bezüglich der durch den Fußboden gebildeten Ebene, gemessen, wenn sich die Räder (3a, 3b) auf dem Fußboden befinden, bildet, und dass er des Weiteren ein oder mehrere Vorderräder (3a) und zwei Hinterräder (3b) aufweist, wobei die Hinterräder (3b) einen Raddurchmesser aufweisen, der größer ist als der Raddurchmesser des Vorderrads oder der Vorderräder (3a).

2. Wagen nach Anspruch 1, **dadurch gekennzeichnet, dass** die den Boden (2) enthaltende Ebene bezüglich der durch den Fußboden gebildeten Ebene einen Winkel (α) größer gleich 8°, vorzugsweise größer gleich 10°, bildet.

3. Wagen nach Anspruch 1 oder 2, **dadurch gekennzeichnet, dass** die den Boden (2) enthaltende Ebene bezüglich der durch den Fußboden gebildeten Ebene einen Winkel (α) kleiner gleich 35°, vorzugsweise kleiner gleich 30°, bildet.

4. Wagen nach einem der Ansprüche 1 bis 3, **dadurch gekennzeichnet, dass** der Boden (2), die Rückwand (4) und die Seitenwände (5) Durchlässe aufweisen.

5. Wagen nach einem der Ansprüche 1 bis 4, **dadurch gekennzeichnet, dass** er des Weiteren Führungsmittel (6), insbesondere einen oder mehrere Griffe oder Betätigungsbügel, aufweist, die es gestatten, den Wagen (1) bei seinen Bewegungen über den Fußboden zu manövrieren.

6. Wagen nach einem der Ansprüche 1 bis 5, **dadurch gekennzeichnet, dass** der Boden (2), die Rückwand (4) und die Seitenwände metallisch sind und mit der Rahmenstruktur (11) verschweißt sind.

7. Wagen nach einem der Ansprüche 1 bis 6, **dadurch gekennzeichnet, dass** die Räder (3a, 3b) an der Rahmenstruktur (11) befestigt sind oder auch von einer Achse, die wiederum an der Rahmenstruktur (11) befestigt ist, getragen werden.

8. Wagen nach einem der Ansprüche 1 bis 7, **dadurch gekennzeichnet, dass** er weiterhin ein oder mehrere Ablagegestelle (7, 8, 9) aufweist, die in dem durch die Seitenwände (5) und die Rückwand (4) definierten Innenvolumen (12) über dem Boden (2) positioniert sind, wobei die jedes Ablagegestell (7, 8, 9) aufweisende Ebene vorzugsweise einen Winkel (α) zwischen 5° und 40° bezüglich der durch den Fußboden gebildeten Ebene bildet, wobei die Ebene jedes Ablagegestells (7, 8, 9) insbesondere parallel zur Ebene des Fußbodens (2) verläuft.

9. Wagen nach Anspruch 8, **dadurch gekennzeichnet, dass** er 3 Ablagegestelle (7, 8, 9) aufweist, wobei die Gestelle vorzugsweise ein- oder zusammenklappbar sind.

10. Wagen nach einem der Ansprüche 1 bis 9, **dadurch gekennzeichnet, dass** er ein Befestigungssystem aufweist, damit die Flaschen "stehend" gehalten werden können.

11. Wagen nach einem der Ansprüche 1 bis 10, **dadurch gekennzeichnet, dass** der ganze oder ein Teil des Bodens (2), die ganze oder ein Teil der Rückwand (4) und alle oder ein Teil der Seitenwände aus einem Metallgitter gebildet sind.

12. Wagen nach einem der Ansprüche 1 bis 11, **dadurch gekennzeichnet, dass** er dazu dimensioniert ist, in seinem Innenvolumen (12) in der "liegenden" Position mindestens 12 Flaschen mit einem Fassungsvermögen von kleiner gleich 5 Litern, in der "stehenden" Position 4 Flaschen mit einem Fassungsvermögen von 15 Litern oder in der "stehenden" Position 3 Flaschen mit einem Fassungsvermögen von 20 Litern aufzunehmen.

13. Verwendung eines Wagens nach einem der vorhergehenden Ansprüche zum Transportieren von mehreren Gasflaschen in einem Krankenhausgebäude.
